Europäisches Patentamt

(19) European Patent Office

Office européen des brevets

(11) EP 1 316 821 A2

(12) **EUROPÄISCHE PATENTANMELDUNG**

(43) Veröffentlichungstag:
**04.06.2003 Patentblatt 2003/23**

(51) Int Cl.7: **G02B 5/18**, G02B 27/44,
G01J 3/18

(21) Anmeldenummer: 02020340.2

(22) Anmeldetag: **12.09.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **29.11.2001 DE 10158638**

(71) Anmelder: **Carl Zeiss Laser Optics GmbH
73447 Oberkochen (DE)**

(72) Erfinder:
- **Kleemann, Bernd
73431 Aalen (DE)**
- **LeMaire, Michel
73447 Oberkochen (DE)**

(74) Vertreter: **Ostertag, Ulrich, Dr.
Patentanwälte
Dr. Ulrich Ostertag
Dr. Reinhard Ostertag
Eibenweg 10
70597 Stuttgart (DE)**

(54) **Optische Anordnung, Littrow-Gitter zur Verwendung in einer optischen Anordnung sowie Verwendung eines Littrow-Gitters**

(57)     Eine optische Anordnung weist eine Lichtquelle auf, die kohärentes Licht (4, 5) einer bestimmten Wellenlänge emittiert. Ferner ist ein optisches Littrow-Gitter (1) vorgesehen, welches in einem bestimmten Littrow-Winkel $theta_L$ angeordnet ist. Dieses weist eine Vielzahl paralleler, periodisch im Abstand jeweils einer bestimmten Gitterperiode (d) aufeinanderfolgende Beugungsstrukturen (2) auf, die auf einem eine Grundfläche vorgebenden Träger angeordnet sind. Die Lichtwellenlänge, die Gitterperiode (d) und der Littrow-Winkel $theta_L$ sind so aufeinander abgestimmt, daß das Gitter (1) in einer der größten Beugungsordnungen m für im Littrow-Winkel $theta_L$ zurückreflektiertes Licht (4, 5) genutzt ist, die noch die Bedingung erfüllt:

$$(2(m + 1)/m - 1) \sin (theta_L) \geq 1$$

Eine derartige optische Anordnung weist eine erhöhte Reflexionseffizienz auf.

FIG. 1

## Beschreibung

Die Erfindung betrifft eine optische Anordnung mit einer Lichtquelle, die kohärentes Licht einer bestimmten Wellenlänge emittiert, und mit einem optischen Littrow-Gitter, angeordnet in einem bestimmten Littrow-Winkel $theta_L$, mit einer Vielzahl paralleler, periodisch im Abstand jeweils einer bestimmten Gitterperiode aufeinander folgender Beugungsstrukturen, die auf einem eine Grundfläche vorgebenden Träger angeordnet sind.

Die Erfindung betrifft weiterhin ein Littrow-Gitter zur Verwendung in einer optischen Anordnung mit einer Lichtquelle, die kohärentes Licht einer bestimmten Wellenlänge emittiert, angeordnet in einem bestimmten Littrow-Winkel $theta_L$, mit einer Vielzahl paralleler, periodisch im Abstand jeweils einer bestimmten Gitterperiode aufeinanderfolgender Beugungsstrukturen, die auf einem eine Grundfläche vorgebenden Träger angeordnet sind.

Ferner betrifft die Erfindung eine Verwendung eines Littrow-Gitters.

Eine optische Anordnung und ein Littrow-Gitter der eingangs genannten Art sind aus der US 6 067 197 A bekannt. Dort wird darauf hingewiesen, daß die Reflexionseffizienz des Littrow-Gitters dann erhöht ist, wenn es in Littrow-Beugungsordnungen betrieben ist, für die keine Strahlung mit noch höherer Beugungsordnung existiert. Das Littrow-Gitter in der optischen Anordnung der US 6 067 197 A weist nach dortiger Berechnung für mit TM-Polarisation einfallendes Licht eines KrF-Lasers bei 248,4 nm in der 95. Littrow-Beugungsordnung eine Reflexionseffizienz von ungefähr 75 % auf. Rechnungen der Anmelderin ergaben für eine vergleichbare optische Anordnung eine niedrigere Reflexionseffizienz im Bereich von 68 %. Diese Differenz ist wohl auf unterschiedliche Annahmen bei der Berechnung der Reflexionseffizienz zurückzuführen. Mit dieser Reflexionseffizienz einhergehende Verluste in der Größenordnung von einem Drittel der eingestrahlten Energie stellen für viele Anwendungen eine erhebliche Beschränkung dar.

Es ist daher die Aufgabe der vorliegenden Erfindung, eine optische Anordnung der eingangs genannten Art derart weiterzubilden, daß ihre Reflexionseffizienz gesteigert ist.

Diese Aufgabe wird erfindungsgemäß dadurch gelöst, daß die Lichtwellenlänge, die Gitterperiode und der Littrow-Winkel $theta_L$ so aufeinander abgestimmt sind, daß das Gitter in einer der größten Beugungsordnungen m für im Littrow-Winkel $theta_L$ zurückreflektiertes Licht genutzt ist, die noch die Bedingung erfüllt:

$$(2(m + 1)/m - 1) \sin(theta_L) \geq 1$$

Nachfolgend wird unter der letzten noch propagierenden Littrow-Beugungsordnung diejenige verstanden, für die keine weitere Strahlung höherer Beugungsordnung existiert, die unter einem gegenüber dem Littrow-Winkel $theta_L$ noch größeren Ausfallswinkel, also bezogen auf die Grundfläche des Trägers noch flacher, ausfallen würde.

Erfindungsgemäß wurde erkannt, daß die Reflexionseffizienz einer gattungsgemäßen optischen Anordnung dadurch gesteigert werden kann, daß nicht irgendeine der Littrow-Beugungsordnungen ausgewählt wird, die die letzte noch propagierende Beugungsordnung ist, sondern daß unter den Littrow-Beugungsordnungen, die die letzten noch propagierenden Beugungsordnungen sind, eine weitere Auswahl getroffen wird. Aus der angegebenen Bedingung resultiert eine optische Anordnung mit einer Littrow-Beugungsordnung, die eine der größten unter den letzten noch propagierenden Beugungsordnungen ist. Für eine so ausgewählte Littrow-Beugungsordnung ist im Vergleich zu allen anderen Beugungsordnungen, die die Bedingung erfüllen, letzte noch propagierende Littrow-Beugungsordnung zu sein, die Reflexionseffizienz am höchsten. Eine gezielte Auswahl gemäß der obigen Bedingung führt daher zu einer optischen Anordnung mit gesteigerter Reflexionseffizienz.

Bevorzugt weist das Licht der Lichtquelle bezüglich des Littrow-Gitters eine TM-Polarisation auf. Für diese Polarisationsrichtung ergibt sich ein relativ großes Steigerungspotenzial für die Reflexionseffizienz, da bekanntermaßen TM-polarisiertes Licht in der Regel mit geringerer Effizienz reflektiert wird als TE-polarisiertes Licht. Für TE-polarisiertes Licht kann gemäß der obigen Auswahl jedoch ebenfalls eine Reflexionssteigerung erzielt werden.

Vorzugsweise wird eine Lichtwellenlänge eingesetzt, die geringer ist als 350 nm. Eine optische Anordnung mit einer derartigen Lichtwellenlänge dient z. B. als Endspiegel eines Laserresonators, für den die Steigerung der Reflexionseffizienz besonders gut genutzt werden kann.

Eine weitere Aufgabe der Erfindung ist es, ein Littrow-Gitter der eingangs genannten Art derart weiterzubilden, daß seine Reflexionseffizienz erhöht ist.

Diese Aufgabe wird erfindungsgemäß gelöst durch ein Littrow-Gitter, bei dem die Lichtwellenlänge, die Gitterperiode und der Littrow-Winkel $theta_L$ so aufeinander abgestimmt sind, daß das Gitter in einer der größten Beugungsordnungen m für im Littrow-Winkel $theta_L$ zurückreflektiertes Licht genutzt ist, die noch die Bedingung erfüllt:

$$(2(m + 1)/m - 1) \sin(theta_L) \geq 1$$

Ein derartiges Littrow-Gitter kann so ausgelegt sein, daß es für eine Reihe optischer Anordnungen, die sich in den Lichtwellenlängen bzw. den Littrow-Winkeln leicht unterscheiden, die Vorteile der Effizienzsteigerung durch die gezielte Auswahl der Littrow-Beugungsordnung genutzt werden können. Weitere Vorteile des Littrow-Gitters ergeben sich aus denjenigen, die oben im Zusammenhang mit der optischen Anordnung geschildert wurden.

Die Beugungsstrukturen des Littrow-Gitters können jeweils eine im wesentlichen im Littrow-Winkel $theta_L$ zur Grundfläche geneigte Blaze-Flanke aufweisen. Eine derartige Strukturierung führt zu einer noch weiter optimierten Reflexionseffizienz.

Dabei können die Beugungsstrukturen eine Gegenflanke umfassen, wobei die Blaze-Flanke und die Gegenflanke im Scheitel einer Beugungsstruktur einen Apex-Winkel bilden, der geringer ist als 90°. Alternativ kann der Apex-Winkel auch größer oder gleich 90° sein.

Das Littrow-Gitter kann aus Quarzglas bestehen. In diesem Material lassen sich die Beugungsstrukturen relativ einfach mit guter optischer Qualität herstellen. Alternativ kann das Littrow-Gitter auch aus einem anderen dielektrischen Material bestehen.

Das Littrow-Gitter kann eine die Reflektivität steigernde Beschichtung aufweisen. Es kann dann aus einem in optischer Qualität gut bearbeitbaren Material bestehen, welches selbst die Strahlung nicht reflektiert, wie dies z. B. bei Quarzglas oder Silizium der Fall ist.

Die Beschichtung kann eine Aluminium-Beschichtung sein. Eine derartige Beschichtung ist relativ preiswert herstellbar und gewährt eine sehr gute Reflexionseffizienz, insbesondere für UV-Licht.

Eine weitere Aufgabe der Erfindung ist es, eine Verwendung für ein erfindungsgemäßes Littrow-Gitter anzugeben, bei der die Abhängigkeit der größten Beugungsordnung m, für die gerade noch keine unter einem verglichen mit dem Einfallswinkel größeren Ausfallswinkel reflektierte Ausgangsstrahlung höherer Beugungsordnung existiert, vom Einfallswinkel für eingestrahltes Licht und damit eine Selektivität der Reflexionseffizienz bezüglich des Einfallswinkels, genutzt werden kann.

Diese Aufgabe wird durch die Verwendung eines erfindungsgemäßen Littrow-Gitters zur Verringerung der Divergenz der Lichtquelle gelöst. Wird der Einstrahlwinkel in das erfindungsgemäße Littrow-Gitter derart gewählt, daß innerhalb des eingestrahlten Lichtbündels spektrale Anteile mit Einstrahlwinkeln vorliegen, für die eine Ausgangsstrahlung höherer Beugungsordnung mit verglichen mit dem Einstrahlwinkel größerem Ausfallswinkel resultiert, dann werden diese Anteile mit geringerer Effizienz vom Littrow-Gitter reflektiert als diejenigen Anteile des einfallenden Lichtbündels, für die eine derartige Ausgangsstrahlung höherer Beugungsordnung nicht existiert. Die Verteilung des Lichtbündels in die effizient und weniger effizient zurückreflektierten Anteile läßt sich über den Einstrahlwinkel des Hauptstrahls des Lichtbündels beeinflussen.

Ferner wird diese weitere Aufgabe durch die Verwendung eines erfindungsgemäßen Littrow-Gitters als Endspiegel in einem Laserresonator zur Bandbreiteneinengung gelöst.

Ausführungsbeispiele der Erfindung werden nachfolgend anhand der Zeichnung näher erläutert; es zeigen

Figur 1            einen stark vergrößerten Ausschnitt aus einem senkrecht zur Erstreckungsrichtung von Beugungsstrukturen erfolgenden Schnitt durch ein optisches Littrow-Gitter;

Figuren 2 und 4    Reflexionseffizienzkurven für Licht, welches mit TM-Polarisation auf Gitter gemäß Figur 1 mit unterschiedlicher Gitterperiode eingestrahlt wird, abhängig vom Blaze-Winkel der Gitterstrukturen;

Figuren 3 und 5    Absorptionskurven für Licht, welches mit TM-Polarisation auf Gitter gemäß Figur 1 mit unterschiedlicher Gitterperiode eingestrahlt wird, abhängig vom Blaze-Winkel der Gitterstrukturen;

Figuren 6 und 8    Reflexionseffizienzkurven für Licht, welches mit TE-Polarisation auf Gitter gemäß Figur 1 mit unterschiedlicher Gitterperiode eingestrahlt wird, abhängig vom Blaze-Winkel der Gitterstrukturen;

Figuren 7 und 9    Absorptionskurven für Licht, welches mit TE-Polarisation auf Gitter gemäß Figur 1 mit unterschiedlicher Gitterperiode eingestrahlt wird, abhängig vom Blaze-Winkel der Gitterstrukturen.

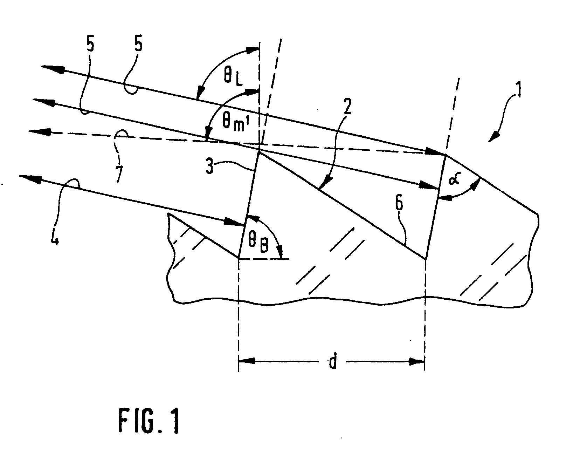

Figur 1 zeigt die Reflexionsverhältnisse an einem insgesamt mit dem Bezugzeichen 1 bezeichneten Littrow-Gitter, von dem einzelne Beugungsstrukturen 2 in einem stark vergrößerten Ausschnitt geschnitten senkrecht zur Erstreckungsrichtung der Beugungsstrukturen 2 dargestellt sind. Letztere haben in der Zeichenebene der Figur 1 einen sägezahnförmigen Querschnitt und weisen jeweils eine Blaze-Flanke 3 auf, an der einfallende Lichtstrahlen 4, 5 reflektiert werden. Ferner umfassen die Beugungsstrukturen 2 jeweils eine Gegenflanke 6, die zwei Blaze-Flanken 3 zur Ergänzung des sägezahnförmigen Querschnitts der Beugungsstrukturen 2 miteinander verbindet.

Die Beugungsstrukturen 2 sind auf einem in Figur 1 nicht dargestellten Träger aufgebracht. Dieser besteht z.B. aus Silizium oder dotiertem Quarzglas. Zur Erhöhung der Reflektivität können die Beugungsstrukturen 2 eine Aluminium-Beschichtung aufweisen.

Die Blaze-Flanken 3 und die Gegenflanken 6 schließen miteinander an den aus dem Schnitt in Figur 1 ersichtlichen Sägezahnspitzen einen Apex-Winkel $\alpha$ von 70,5° ein.

Bei der in der Figur 1 dargestellten Littrow-Anordnung werden diejenigen Lichtstrahlen 4, 5 genutzt, die nach ihrer Reflexion an den Blaze-Flanken 3 in sich selbst zurückreflektiert werden. Der Littrow-Winkel $\text{theta}_L$ ergibt sich aus der Beugungsbedingung

$$m\ \text{lambda} = 2\ d\ \sin(\text{theta}_L) \tag{1}$$

Hierbei ist m die Beugungsordnung des Littrow-Gitters 1, lambda die Wellenlänge der Lichtstrahlen 4, 5, die im betrachteten Ausführungsbeispiel, bei dem ein KrF-Laser als Lichtquelle eingesetzt ist, 248,4 nm beträgt, d die Gitterkonstante, d. h. der Abstand zweier aufeinanderfolgender Beugungsstrukturen 2, und $\text{theta}_L$ der Littrow-Winkel.

Die Blaze-Flanke 3 ist gegenüber der vom Träger vorgegebenen Grundfläche um einen Winkel $\text{theta}_B$ geneigt, der zum Erzielen einer optimalen Reflexionseffizienz in Littrow-Anordnung eine Größe hat, die mit dem Littrow-Winkel $\text{theta}_L$ innerhalb eines Toleranzbereichs von $\pm$ 1° übereinstimmt.

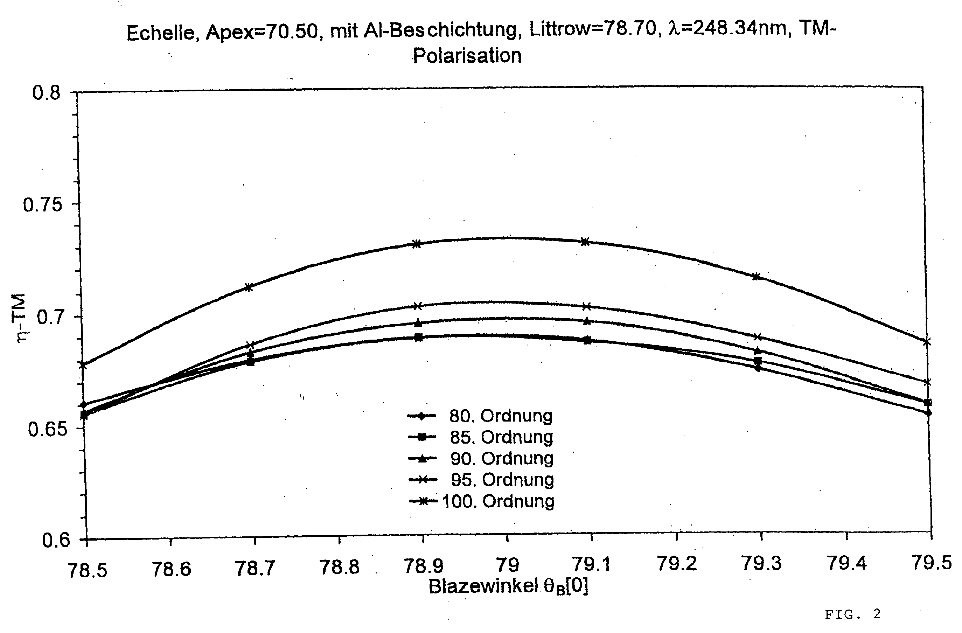

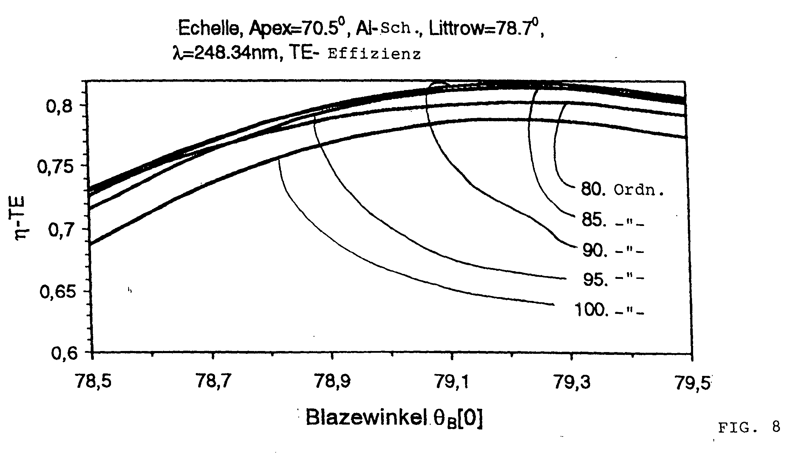

Bei der Littrow-Anordnung gemäß Figur 1 hängt, wie aus den Figuren 2, 4, 6 und 8 ersichtlich, die Reflexionseffizienz von der Littrow-Beugungsordnung (nachfolgend kurz "Beugungsordung" oder "Ordnung") ab. Bei vorgegebenem Littrow-Winkel (78,7°) und vorgegebener Wellenlänge lambda läßt sich, wie aus der Beugungsbedingung (1) hervorgeht, die Beugungsordnung nur über die Gitterkonstante d variieren.

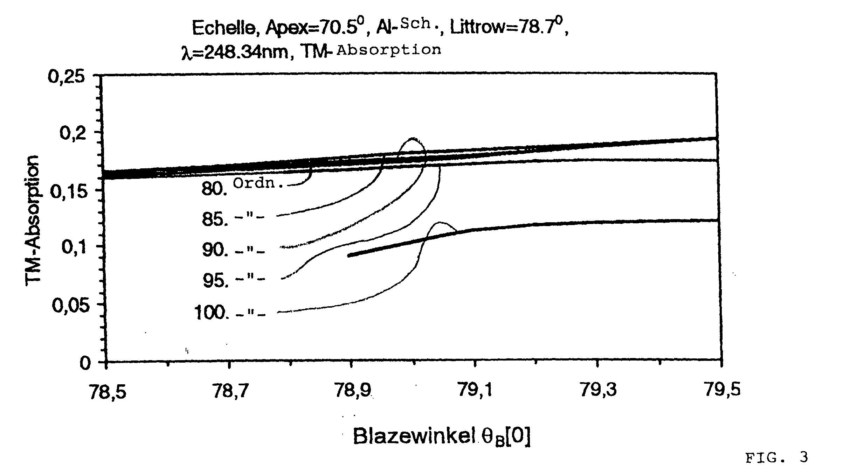

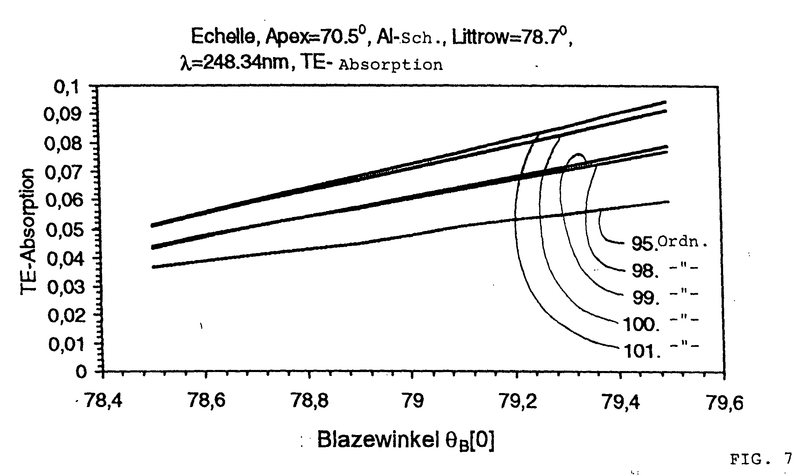

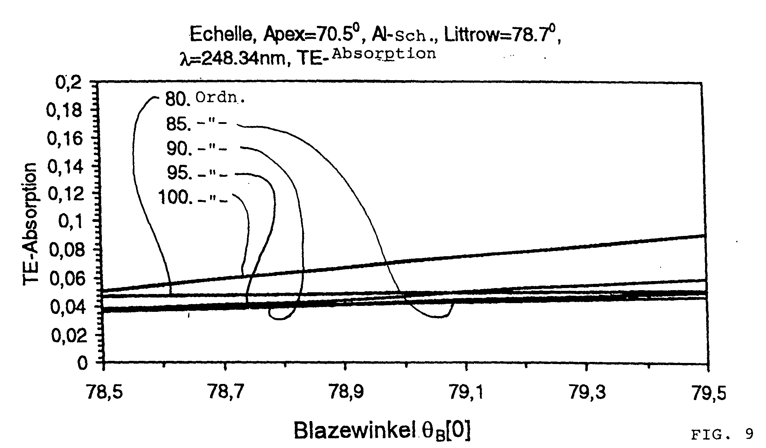

Die Figuren 2, 4, 6 und 8 sowie die korrespondierenden Figuren 3, 5, 7 und 9, die sämtlich aus elektromagnetischoptischen Rechnungen resultieren, zeigen daher die optischen Eigenschaften verschiedener Ausführungsformen von Littrow-Gittern mit Beugungsstrukturen 2 gemäß Figur 1, die sich in ihrer Gitterkonstante d und damit in ihrer Beugungsordnung m unterscheiden.

In Figur 2 ist die Änderung der Reflexionseffizienz in Abhängigkeit vom Blaze-Winkel $\text{theta}_B$ für Littrow-Gitter gemäß Figur 1 für verschiedene Werte der Beugungsordnung dargestellt. Eingestrahlt ist hier Licht mit TM-Polarisation, d.h. die Polarisationsrichtung steht senkrecht auf der Erstreckungsrichtung der Beugungsstrukturen 2 und senkrecht zur Strahlrichtung. Es ergibt sich eine signifikante Erhöhung der Reflexionseffizienz von einem Optimum im Bereich von 69 % bei einem in der 80. Ordnung (Rauten) betriebenen Littrow-Gitter bei einem Blaze-Winkel von ca. 79° hin zu einer Reflexionseffizienz von mehr als 73 % bei einem in der 100. Ordnung betriebenen Littrow-Gitter bei einem Blaze-Winkel von ca. 78,9°. Die Reflexionseffizienzen für die 85. (Quadrate), 90. (Dreiecke) und 95. (Kreuze) Ordnung liegen bei den angegebenen Blaze-Winkeln zwischen den Reflexionseffizienzen, die durch die 80. und die 100. (Sterne) Ordnung vorgegeben werden.

In Figur 3 ist die Änderung der Absorption in Abhängigkeit vom Blaze-Winkel $\text{theta}_B$ für die Beugungs- und Polarisationsverhältnisse gemäß Figur 2 aufgetragen. Die Absorption wird nachfolgend in Einheiten des prozentualen Verlustes der eingestrahlten Lichtenergie angegeben. Neben der in Figur 3 dargestellten Absorption ist als zusätzlicher Verlustfaktor, der die Reflexionseffizienz beeinflußt, noch die Beugung der einfallenden Lichtstrahlen in andere Ordnungen als die genutzte Littrow-Ordnung zu berücksichtigen. Daher läßt sich in der Regel die Absorption nicht über die Energieerhaltung direkt aus der Reflexionseffizienz der Nutzordnung gewinnen. Aus Figur 3 geht hervor, daß bei einem Littrow-Gitter, dessen Gitterperiode d so gewählt ist, daß die 100. Beugungsordnung genutzt wird, die Absorptionsverluste im Vergleich zu den anderen dargestellten Ordnungen am geringsten sind. Bei einem Blaze-Winkel von 78,9° weist die Absorption einen Wert von ca. 9% auf, während für die in niedrigeren Beugungsordnungen (80. bis 95.) genutzten Littrow-Gitter die Absorption im Bereich von 17% liegt und im dargestellten Bereich nur unwesentlich vom Blazewinkel abhängt.

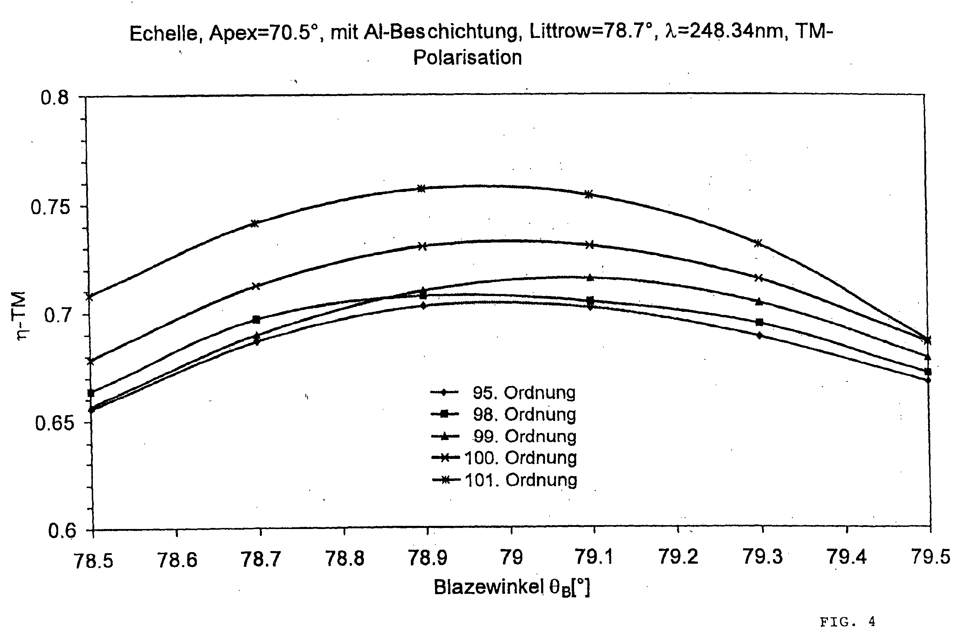

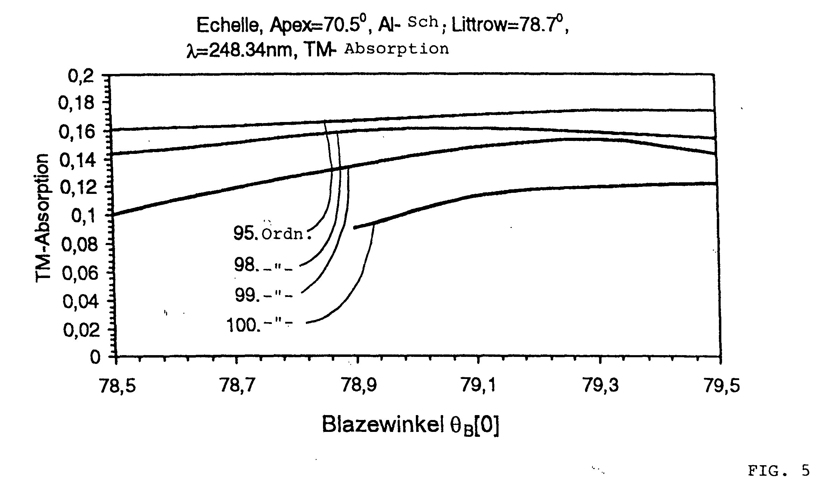

Die Figuren 4 und 5 zeigen die Reflexionseffizienz sowie die Absorption für TM-polarisierte Lichstrahlen in einer zu den Figuren 2 bzw. 3 analogen Darstellung, die bis auf die Auswahl der Gitterkonstanten d für die betrachteten Littrow-Gitter, für die entsprechende Ordnungen resultieren, mit der Darstellung der Figuren 2 und 3 identisch ist. Statt wie in den Figuren 2 und 3 die Verhältnisse für die 80., 85., 90., 95., 100. Ordnung darzustellen, sind in Figur 4 die Ordnungen 95 (Rauten), 98 (Quadrate), 99 (Dreiecke), 100 (Kreuze), 101 (Sterne) und in Figur 5 die Ordnungen 95, 98, 99 und 100 ausgewählt. Aus der Figur 4 wird deutlich, daß die Reflexionseffizienz für Ordnungen um die 100. Beugungsordnung stark zunimmt und insbesondere die 101. Beugungsordnung gegenüber der 100. Beugungsordnung eine nochmals stark erhöhte Beugungseffizienz aufweist, die bei einem Blaze-Winkel von ca. 78,7° einen Maximalwert von ca. 79 % erreicht. Über den gesamten dargestellten Bereich von Blaze-Winkeln ist die Reflexionseffizienz bei der 101. Beugungsordnung höher als bei allen anderen dargestellten Beugungsordnungen.

Für die 95., 98., 99. und 100. Beugungsordnung spiegelt sich die zunehmende Reflexionseffizienz (vgl. Figur 4) auch in einer abnehmenden Absorption für TM-polarisierte Lichtstrahlen wieder, wie Figur 5 zeigt.

Für alle in den Figuren 2 bis 5 dargestellten Littrow-Beugungsordnungen ist die jeweilige Littrow-Beugungsordnung die letzte propagierende Beugungsordnung. Dies bedeutet, daß es für diese Littrow-Beugungsordnungen keine Lichtstrahlen 7 (vgl. Figur 1) gibt, die in einer höheren Beugungsordnung $m' = m + 1$ unter einem noch größeren Winkel $\theta_m$, als dem Littrow-Winkel $\theta_L$, also noch flacher bezüglich der durch den Träger vorgegebenen Grundfläche, ausfallen. Für derartige Ausfallswinkel größer als der Littrow-Winkel $\theta_L$ ergibt sich bei den Gitterkonstanten d, für die gemäß der Beugungsbedingung (1) Beugungsordnungen gemäß Figur 2 resultieren, keine konstruktive Interferenz mehr.

Oberhalb der 101. in den Figuren 2 bis 5 dargestellten Littrow-Beugungsordnung existiert ein Ausfallswinkel $\theta_{m'}$, der größer ist als der Littrow-Winkel $\theta_L$ und für den die Beugungsbedingung erfüllt ist, d. h. für den die ausfallenden Lichtstrahlen (vgl. Lichtstrahl 7 in Fig. 1) konstruktiv interferieren. Für einen solchen Ausfallswinkel $\theta_m$, muß die folgende Beugungsbedingung erfüllt sein:

$$\sin(\theta_{m'}) = (m + 1)\lambda/d - \sin(\theta_L) \qquad (2)$$

Hieraus ergibt sich unter zusätzlicher Berücksichtigung der Littrowbedingung (1) als Bedingung für die größte Beugungsordnung m, die noch letzte propagierende Littrow-Beugungsordnung ist:

$$(2\,(m + 1)/m - 1)\,\sin(\theta_L) \geq 1 \qquad (3)$$

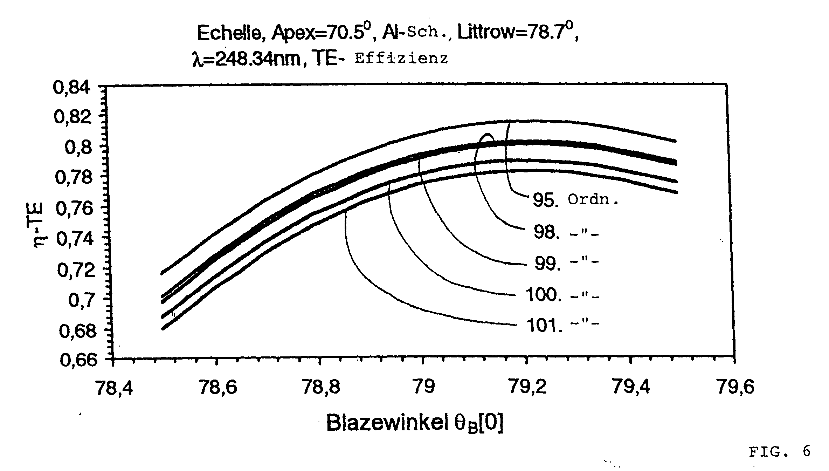

Diese größtmögliche letzte propagierende Littrow-Beugungsordnung m hängt demnach nur noch vom Littrow-Winkel $\theta_L$ ab. Für den Littrow-Winkel 78,7° des Littrow-Gitters 1 ergibt sich die Beugungsordnung $m = 101$ als größtmögliche letzte propagierende Littrow-Beugungsordnung, deren Reflexionseffizienz in Figur 4 und 6 dargestellt ist. Für noch größere Littrow-Beugungsordnungen ($m \geq 102$) ist die Bedingung (3) nicht mehr erfüllt und es existiert eine die Beugungsbedingung (2) erfüllende und gegenüber der Littrow-Nutzstrahlung bezüglich der durch den Träger vorgegebenen Grundfläche noch flacher ausfallende Ausgangsstrahlung 7. Daher ist für diese noch größeren Beugungsordnungen die Reflexionseffizienz gegenüber der Beugungsordnung $m = 101$ stark reduziert.

Analog zu den Figuren 2 bis 5 sind in den Figuren 6 bis 9 die Effizienz- bzw. Absorptionsverhältnisse von Littrow-Gittern gemäß Figur 1 für Lichtstrahlen dargestellt, die parallel zur Erstreckungsrichtung der Beugungsstrukturen 2 polarisiert sind (TE-Polarisation). Aus der Figur 6, die die Reflexionseffizienz für Licht der Littrow-Beugungsordnungen 95, 98, 99, 100, 101 in Abhängigkeit vom Blaze-Winkel $\theta_B$ zeigt, ergibt sich, daß die Reflexionseffizienz bei der TE-Polarisation mit steigender Littrow-Beugungsordnung kontinuierlich geringfügig abnimmt. Bei der 80. Beugungsordnung wird ein Maximalwert der Effizienz von ca. 82 % bei einem Blaze-Winkel von 79,2° erreicht. Dieser Maximalwert sinkt auf einen Maximalwert von ca. 78 % bei einem Blaze-Winkel von 79,2° bei der 101. Littrow-Beugungsordnung ab. Diese Abnahme ist sowohl absolut als auch im Verhältnis geringer als die Reflexionseffizienzzunahme bei der TM-Polarisation mit zunehmender Beugungsordnung bis zur maximalen Littrow-Beugungsordnung $m = 101$, die die letzte propagierende Littrow-Beugungsordnung ist (vgl. Fig. 4).

Durch Optimierung der Littrow-Beugungsordnung in Richtung der letzten noch propagierenden Littrow-Beugungsordnung, für die keine flacher ausfallende, die Beugungsbedingung (2) erfüllende Ausgangsstrahlung 7 mehr existiert, läßt sich abhängig von der Geometrie der Beugungsstrukturen 2 auch eine gleichzeitige Steigerung der Reflexionseffizienzen für die TM- und die TE-Polarisation erreichen.

Für andere Apex-Winkel ergeben sich für die größte Littrow-Beugungsordnung, die noch letzte propagierende Ordnung ist, Erhöhungen der Reflexionseffizienz sowohl für die TM- als auch für die TE-Polarisation.

Die Bedingung (3) für die größte Littrow-Beugungsordnung, die letzte propagierende Ordnung ist, kann auch dahingehend ausgewertet werden, daß einer Littrow-Beugungsordnung m der kleinste zulässige Einstrahl-Winkel $\theta_S$ zugeordnet wird, für den diese Littrow-Beugungsordnung m die letzte propagierende Ordnung ist. Es ergibt sich beispielsweise für Littrow-Beugungsordnungen m zwischen 95 und 108 folgende Wertetabelle:

| Littrow-Beugungsordnung m | kleinster zulässiger Einstrahl-Winkel $\theta_S$ |
|---|---|
| 95 | 78,345° |
| 96 | 78,405° |
| 97 | 78,464° |
| 98 | 78,522° |
| 99 | 78,579° |
| 100 | 78,636° |
| 101 | 78,691° |
| 102 | 78,746° |

(fortgesetzt)

| Littrow-Beugungsordnung m | kleinster zulässiger Einstrahl-Winkel $theta_S$ |
|---|---|
| 103 | 78,800° |
| 104 | 78,853° |
| 105 | 78,905° |
| 106 | 78,957° |
| 107 | 79,008° |
| 108 | 79,058° |

Zu einem eingestrahlten Lichtbündel, dessen Hauptstrahl einen vorgegebenen Littrow-Winkel, z. B. $theta_L$ = 78,7° aufweist, ist, wenn zunächst nur der Hauptstrahl betrachtet wird, jede Littrow-Beugungsordnung, die einen Grenzwinkel $theta_S$ hat, der kleiner ist als $theta_L$, letzte noch propagierende Ordnung. Bei Verwendung einer Littrow-Beugungsordnung mit $theta_S \geq theta_L$ gibt es mindestens eine unter einem verglichen mit dem Littrow-Winkel $theta_L$ größeren Ausfallswinkel ausfallende, die Beugungsbedingung erfüllende Ausgangsstrahlung höherer Beugungsordnung.

Wenn die einfallenden Lichtstrahlen 4, 5 eine Divergenz aufweisen, also über das einfallende Lichtstrahlenbündel eine Variation des Einstrahl-Winkels um $theta_L$ herum auftritt, kann die gemäß obiger Tabelle geringe Winkeltoleranz der letzten propagierenden Littrow-Beugungsordnung m dazu verwendet werden, eine gewünschte Bandbreiteneinengung der Laserstrahlung zu verstärken. Beispielsweise soll ein Bündel aus Lichtstrahlen bei einem Littrow-Gitter 1 gemäß Figur 1, das in 101. Ordnung betrieben wird, eingestrahlt werden, dessen Hauptstrahl im Littrow-Winkel $theta_L$ einfällt. In diesem Falle führt eine Divergenz des eingestrahlten Lichtbündels, die größer ist als 0,01° dazu, daß für die Strahlen, die einen Einstrahl-Winkel aufweisen, der kleiner ist als 78,691°, also der Grenzwinkel der 101. Ordnung, eine weitere Beugungsordnung (vgl. Ausgangsstrahl 7 in Fig. 1) auftritt, die der Littrow-Ordnung Energie entzieht. Der diesen Einstrahl-Winkeln zugeordnete Teil der zurückreflektierten Nutzstrahlung wird mit geringerer Energie zurückreflektiert als der zu Einstrahl-Winkeln größer als 78,691° gehörende Teil der Nutzstrahlung.

Bei der Verwendung des Littrow-Gitters 1 in einer derartigen Einstrahl-Geometrie als Endspiegel in einem Laserresonator führt dies bei mehreren Laserzyklen zu einer deutlichen Abschwächung von umlaufenden Wellenlängen, die zu Littrow-Winkeln gehören, die geringer sind als 78, 691°. Dieser Einengung der Divergenz ist aufgrund der Gitterdispersion unmittelbar eine Einengung der Bandbreite zugeordnet. Der Toleranzwinkel, ab dem die die Reflexionseffizienz schwächende weitere Beugungsordnung auftritt, kann durch Änderung des Einstrahlwinkels des Hauptstrahls des divergenten Lichtbündels geändert, z. B. herabgesetzt werden.

**Patentansprüche**

1. Optische Anordnung mit einer Lichtquelle, die kohärentes Licht einer bestimmten Wellenlänge emittiert, und mit einem optischen Littrow-Gitter, angeordnet in einem bestimmten Littrow-Winkel $theta_L$, mit einer Vielzahl paralleler, periodisch im Abstand jeweils einer bestimmten Gitterperiode aufeinander folgender Beugungsstrukturen, die auf einem eine Grundfläche vorgebenden Träger angeordnet sind,
   **dadurch gekennzeichnet, daß**
   die Lichtwellenlänge, die Gitterperiode (d) und der Littrow-Winkel $theta_L$ so aufeinander abgestimmt sind, daß das Gitter (1) in einer der größten Beugungsordnungen m für im Littrow-Winkel $theta_L$ zurückreflektiertes Licht (4, 5) genutzt ist, die noch die Bedingung erfüllt:

$$(2(m + 1)/m - 1) \sin(theta_L) \geq 1$$

2. Optische Anordnung nach Anspruch 1, **dadurch gekennzeichnet, daß** das Licht (4, 5) der Lichtquelle bezüglich des Littrow-Gitters (1) eine TM-Polarisation aufweist.

3. Optische Anordnung nach Anspruch 1 oder 2, **gekennzeichnet durch** eine Lichtwellenlänge, die geringer ist als 350 nm.

4. Littrow-Gitter zur Verwendung in einer optischen Anordnung mit einer Lichtquelle, die kohärentes Licht einer bestimmten Wellenlänge emittiert, angeordnet in einem bestimmten Littrow-Winkel $theta_L$, mit einer Vielzahl paralleler, periodisch im Abstand jeweils einer bestimmten Gitterperiode aufeinander folgender Beugungsstrukturen, die auf einem eine Grundfläche vorgebenden Träger angeordnet sind,

**dadurch gekennzeichnet, daß**
die Lichtwellenlänge, die Gitterperiode (d) und der Littrow-Winkel $\text{theta}_L$ so aufeinander abgestimmt sind, daß das Gitter (1) in einer der größten Beugungsordnungen m für im Littrow-Winkel $\text{theta}_L$ zurückreflektiertes Licht (4, 5) genutzt ist, die noch die Bedingung erfüllt:

$$(2(m + 1)/m - 1) \sin(\text{theta}_L) \geq 1$$

5. Littrow-Gitter nach Anspruch 4, **dadurch gekennzeichnet, daß** die Beugungsstrukturen (2) jeweils eine im wesentlichen im Littrow-Winkel $\text{theta}_L$ zur Grundfläche geneigte Blaze-Flanke (3) aufweisen.

6. Littrow-Gitter nach Anspruch 5, **dadurch gekennzeichnet, daß** die Beugungsstrukturen (2) eine Gegenflanke (6) umfassen, wobei die Blaze-Flanke (3) und die Gegenflanke (6) im Scheitel einer Beugungsstruktur (2) einen Apex-Winkel ($\alpha$) bilden, der geringer ist als 90°.

7. Littrow-Gitter nach einem der Ansprüche 4 bis 6,
   **dadurch gekennzeichnet, daß** es aus Quarzglas besteht.

8. Littrow-Gitter nach einem der Ansprüche 4 bis 7,
   **dadurch gekennzeichnet, daß** es eine die Reflektivität steigernde Beschichtung aufweist.

9. Littrow-Gitter nach Anspruch 8, **dadurch gekennzeichnet, daß** die Beschichtung eine Aluminium-Beschichtung ist.

10. Verwendung eines Littrow-Gitters nach einem der Ansprüche 4 bis 9 zur Verringerung der Divergenz der Lichtquelle.

11. Verwendung eines Littrow-Gitters nach einem der Ansprüche 4 bis 9 als Endspiegel in einem Laserresonator zur Bandbreiteneinengung.

FIG. 1

Echelle, Apex=70.50, mit Al-Beschichtung, Littrow=78.70, λ=248.34nm, TM-Polarisation

- 80. Ordnung
- 85. Ordnung
- 90. Ordnung
- 95. Ordnung
- 100. Ordnung

Blazewinkel $\theta_B[0]$

FIG. 2

EP 1 316 821 A2

EP 1 316 821 A2

Echelle, Apex=70.5$^0$, Al-Sch., Littrow=78.7$^0$,
$\lambda$=248.34nm, TM- Absorption

FIG. 3

Echelle, Apex=70.5°, mit Al-Beschichtung, Littrow=78.7°, $\lambda$=248.34nm, TM-Polarisation

FIG. 4

EP 1 316 821 A2

Echelle, Apex=70.5°, Al- Sch; Littrow=78.7°,
λ=248.34nm, TM- Absorption

FIG. 5

EP 1 316 821 A2

Echelle, Apex=70.5$^0$, Al-Sch., Littrow=78.7$^0$,
λ=248.34nm, TE- Effizienz

FIG. 6

EP 1 316 821 A2

Echelle, Apex=70.5$^0$, Al-Sch., Littrow=78.7$^0$,
λ=248.34nm, TE- Absorption

FIG. 7

EP 1 316 821 A2

EP 1 316 821 A2

Echelle, Apex=70.5$^0$, Al-Sch., Littrow=78.7$^0$,
$\lambda$=248.34nm, TE- Effizienz

80. Ordn.
85. -"-
90. -"-
95. -"-
100. -"-

Blazewinkel $\theta_B$[0]

FIG. 8

EP 1 316 821 A2

Echelle, Apex=70.5⁰, Al-sch., Littrow=78.7⁰,
λ=248.34nm, TE-Absorption

FIG. 9